# EUROPEAN PATENT APPLICATION

(11) **EP 0 940 358 A1**
(43) Date of publication of application: **08.09.1999**
(21) Application number: 99102510.7
(22) Date of filing: 10.02.1999
(51) Int. Cl.: B65G 67/60, B65G 17/12, B65G 17/36

(54) **Endless bucket conveyor, particularly for ship unloading gear or the like**

(30) Priority: 04.03.1998 IT GE980011
(71) Applicant: TECHINT COMPAGNIA TECNICA INTERNAZIONALE S.p.A., 20121 Milano (IT)
(72) Inventor: Magrassi, Piero, 20050 Correzzana (MI) (IT)
(74) Representative: Porsia, Attilio, Dr.

(57) **Abstract**

Bucket conveyor comprising a plurality of buckets (2) connected, equidistantly from each other, to an endless drive element (201) arranged on a support (1) having at one end at least one drive pulley and at the other end at least one turn pulley (101), each of the said buckets (2) comprising a loading mouth (102), a bottom wall (502), two side walls (402) and a top wall (602); at least one portion (502) of one of the said walls of the bucket (2) is mobile relative to the other walls, and can adopt at least two positions, which allow the said bucket at least one configuration of greatest capacity and one of least capacity, means being provided on the said conveyor for moving (401, 301) and positioning (802, 622) the said wall portion (502).

## Description

The present invention relates to an endless bucket conveyor, particularly for ship unloading gear or the like.

Endless bucket conveyors are very widely used, especially where the material to be transferred presents no risk of fragmentation, in particular, that is to say, ores and earthy materials but also grain and seed corn, and in particular such devices are used where the consistency of the material is such that the use of pneumatic means is not recommended.

One typical problem with the use of such systems for materials transfer is that, depending on the density, i.e. the specific weight of the material being transferred, the same bucket can cope with even macroscopically different loads. This obviously reduces the efficiency with which the system operates, reduces the speed of transfer and increases the effort from the drive means, thereby increasing the energy consumption. This is due to that fact that, as is obvious, the same bucket, loaded with a heavy ore, e.g. a ferrous ore, or loaded with coal, presents a vastly different weight for the same volume of load.

It is an object of the present invention to provide a bucket conveyor in which this type of problem is overcome, thereby enabling a greater uniformity of performance despite the different types of load handled.

The subject of the present invention is therefore a bucket conveyor comprising a plurality of buckets connected, equidistantly from each other, to an endless drive element arranged on a support having at one end at least one drive pulley and at the other end at least one turn pulley, each of the said buckets comprising a loading mouth, a bottom wall, two side walls and a top wall, the conveyor being characterized in that at least one portion of one of the said walls of the bucket is mobile relative to the other walls, and can adopt at least two positions, which allow the said bucket at least one configuration of greatest capacity and one of least capacity, means being provided on the said conveyor for moving and positioning the said wall portion.

In one embodiment, the said wall having at least one mobile portion is the bottom wall; this mobile portion is connected along one edge in a pivoting manner, i.e. hinged, near the loading mouth of the bucket, while at the opposite edge, nearest the top wall, it has elements designed to be acted upon by the said movement means and positioning means of the said wall portion, the said elements projecting out through slots formed along the said top wall.

In addition, the means for moving the said wall portion may comprise means for moving it from the position of greatest to that of least load, which comprise at least one cam able to act on rollers located at the end of the said element projecting from the mobile wall portion, the said cam being connected to the said support of the conveyor and being movable between an active position and an inactive position, the means for positioning the wall portion being provided on the said bucket, and comprising means for retaining the ends of the said projecting elements, and means for moving them from the position of least to that of greatest load, comprising at least one cam able to act on rollers integral with the said retention means.

Further advantages and characteristics of the present invention will be clearer from the following description of an embodiment of the present invention composed, for illustrative and non-restrictive purposes, with reference to the attached drawings in which:
Figure 1 is a schematic side view of a bucket conveyor according to the present invention;
Figure 2 is a plan view from above of a bucket of the elevator according to the invention;
Figure 3 is a sectional view taken on III-III through the bucket shown in Figure 2;
Figure 4 shows the stages in the movement of the mobile wall portion of the bucket from the position of least to that of greatest load;
Figure 5 is a plan view from above of one of the stages in the movement of the mobile wall portion illustrated in Figure 4;
Figures 6 to 8 show, in a sectional view similar to that given in Figure 3 the stages in moving the mobile wall portion of the bucket from the position of greatest to that of least load; and
Figure 9 is a sectional view taken on IX-IX as marked in Figure 6.

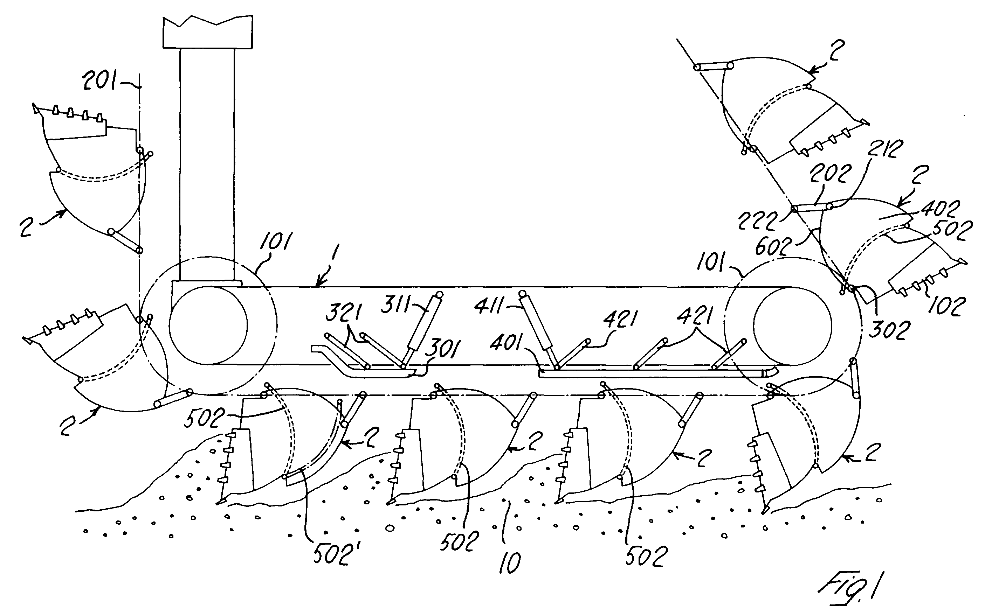

In Figure 1 the reference 1 denotes the structure supporting the bucket conveyor according to the present invention. Mounted rotatably on the said structure 1 are the pulleys 101 carrying the continuous drive element 201, which in the case illustrated is a chain, to which the buckets 2 are connected by the connecting means 302 and 202, comprising a hinged arm which at its end 212 is connected to the bucket while at the other end 222 it is connected to the chain 201. Each bucket has a loading mouth 102, two side walls 402, a top wall 602 and a bottom wall 502. This bottom wall is hinged in the vicinity of the loading mouth while its other end pivots and can adopt the configuration shown in broken lines and denoted by the numeral 502'. On the structure 1 are the cam 301 forming a parallel-motion mechanism with arms 321 positionable by means of the cylinder 311, and the cam 401 forming a parallel-motion mechanism with arms 421 positionable by means of the cylinder 411. The material 10 intended for the load is collected in the manner illustrated.

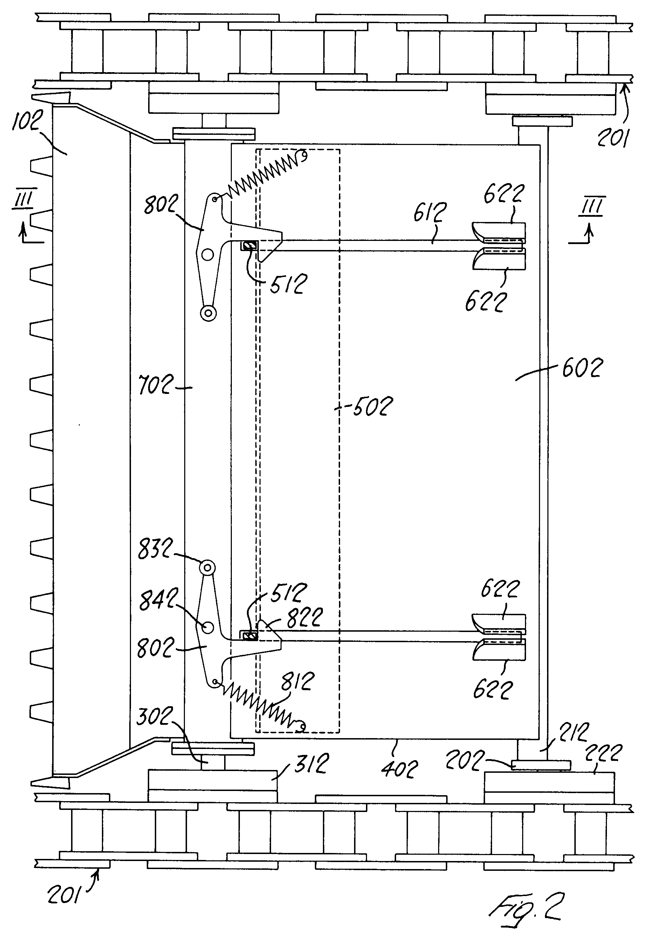

Figure 2 shows a bucket 2 in plan view from above. The top wall 602 of the bucket has at its extremities, on one side the bar 212 connected by the arm 202 to the plate 222 which is attached to the chain 201, and on the other side the sleeve 702 containing the bar 302 which is connected by the plate 312 to the chain 201. The top wall 602 possesses two parallel longitudinal slots 612 in which slide the two ribs 512 of the bottom wall 502. At the ends of the slots nearest the loading mouth 102 are two ratchets 802: each of these comprises an arm hinged by the pin 842, which is connected to the top wall 602, and at one end has a roller 832 and at the opposite end is connected to a spring 812; the said arm is provided with a tooth 822 which engages one of the ribs 512 of the bottom wall 502. At the other end of the said slots are two pairs of lips 622 for catching the said ribs 512.

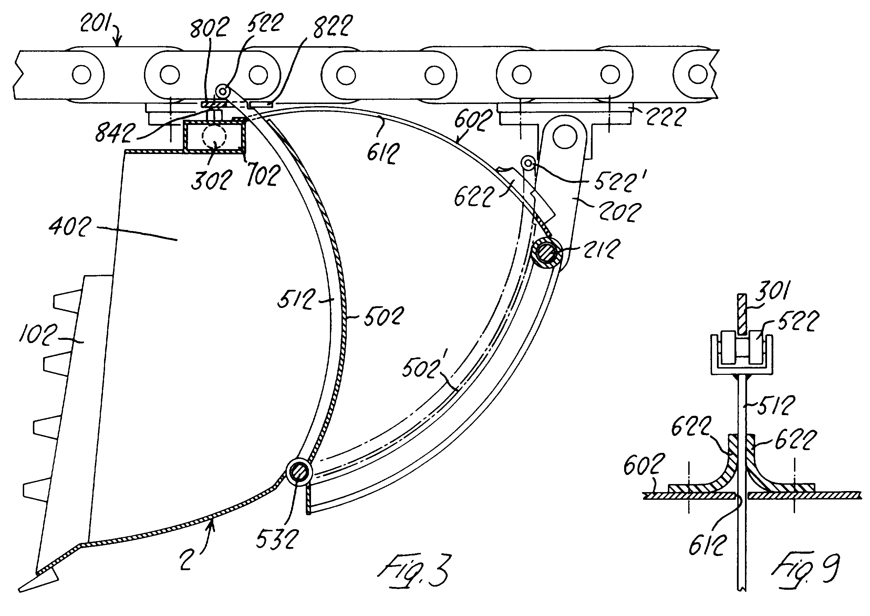

In Figure 3 the bucket 2 is illustrated in section on III-III; identical parts are given identical numerals. In the figure, the bottom wall 502 of the bucket 2 is positioned so that the ends of its ribs 512 are locked by the teeth 822 of the ratchets 802 in such a position that the bucket has its least capacity. As already illustrated in Figure 1, the bottom wall can also move to the position of greatest capacity indicated in broken lines and marked 502'. In this position the ends of the ribs 512' are held by the lips 622.

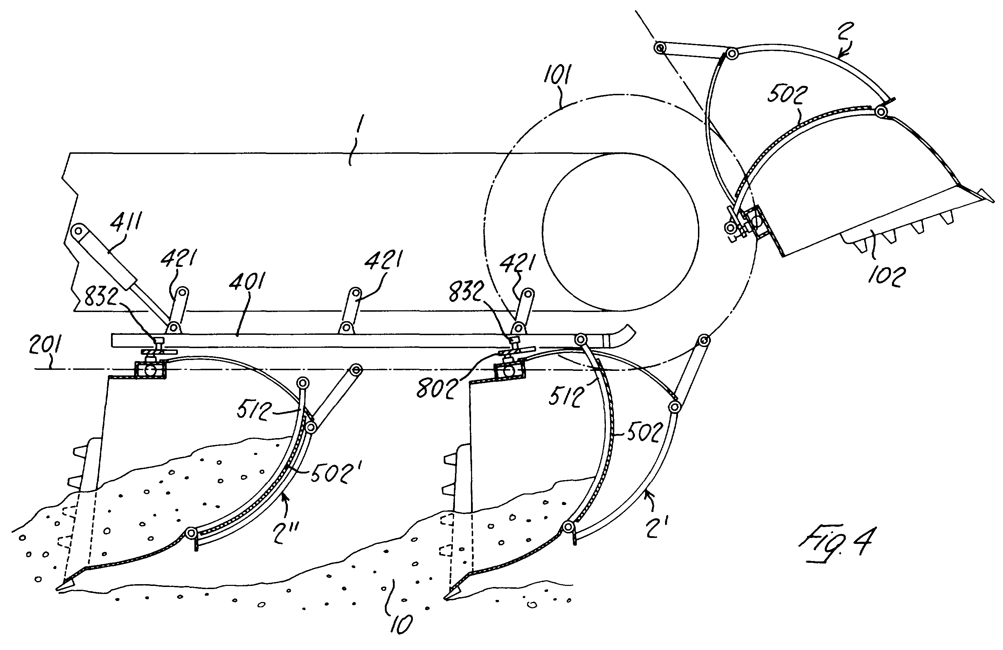

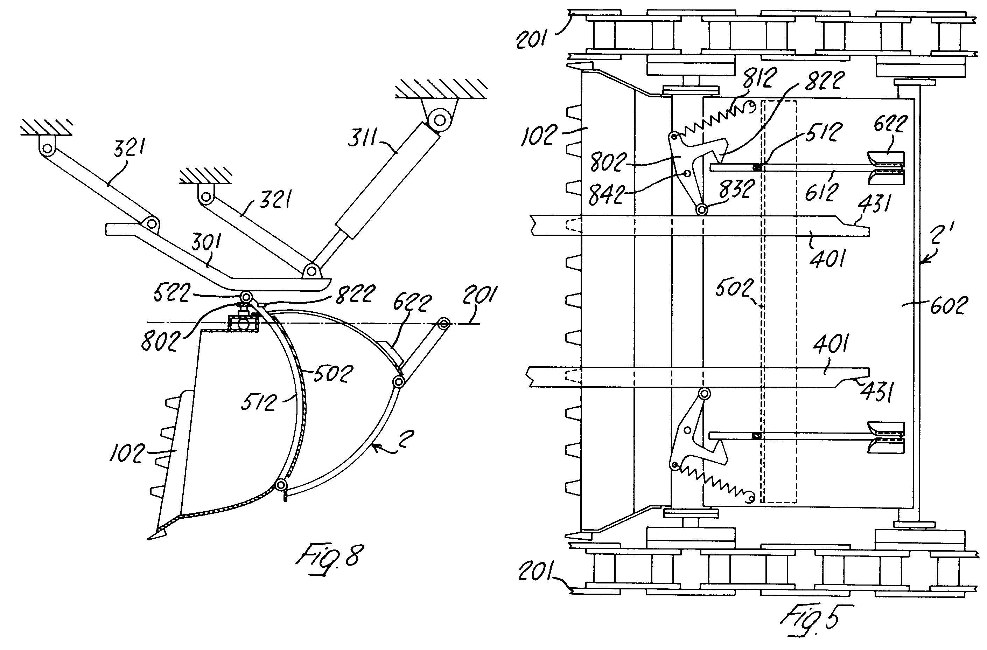

Figure 4 diagrammatically shows the change in the configuration of the buckets of the conveyor according to the invention from least to greatest loading capacity; identical parts are given identical numerals. The three buckets 2, 2' and 2'' illustrate the situation before, during and after the change of configuration. Figure 5 is a plan view from above of the same situation depicted in the case of bucket 2'. The figure shows the cam 401 that acts on the rollers 832 of the ratchets 802; for this purpose the said cam 401 is provided at one end with the approach surfaces 431.

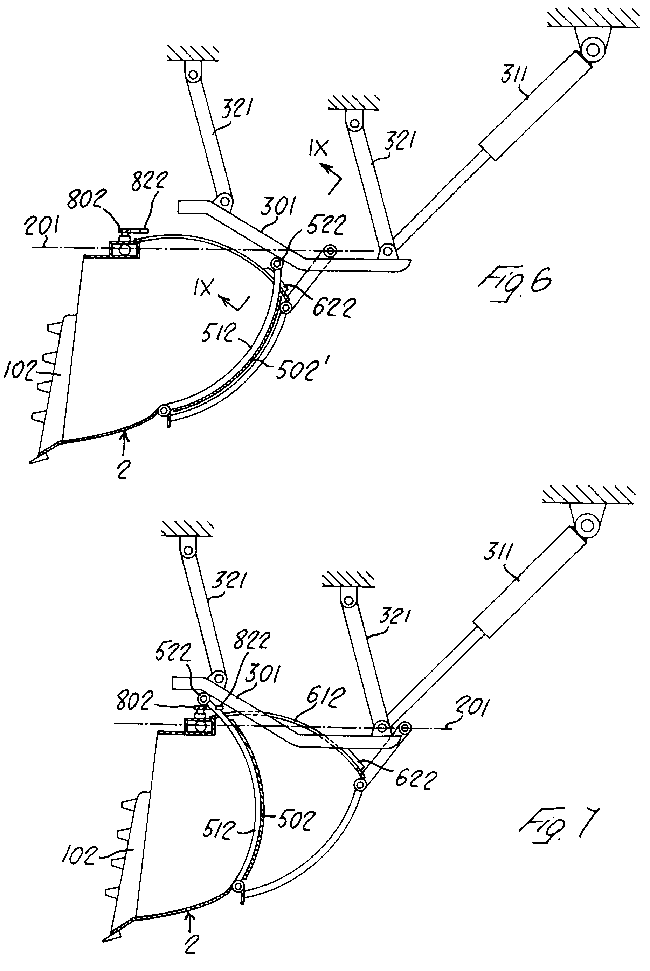

In a similar way Figures 6 to 8 illustrate the stages in the alteration of the configuration of the buckets from greatest to least capacity; also, Figure 9 illustrates a detail showing the action of the cam 301 on the roller 522 at the free end of each rib 512 of the bottom wall 502. As may be observed, the cam 301 is comparable in section to the ribs 522.

The operation of the conveyor according to the present invention will now be made clear. As already described, the bucket 2 of the conveyor of the invention has a bottom wall 502 hinged along one edge to the hinge pin 532 near the loading mouth 102, the other edge being movable relative to the top wall 602. This means that the bucket 2 can adopt at least two configurations, that is, a configuration of least capacity, like that illustrated in Figure 3, or a configuration of greatest capacity in which the bottom wall is in the position illustrated in broken lines in the same Figure 3 and labelled 502'.

The operation of modifying the capacity of the bucket is done by the means for moving the movable wall, i.e. the bottom wall 502, which comprise the cams 401 and 301. Figure 4 shows the change in the attitude of the buckets which leads from the least capacity configuration to the greatest capacity configuration. The bucket 2 which, following the movement of the chain 201, is descending down the structure 1 of the conveyor has the ribs 512 of its bottom wall 502 locked by the teeth 822 of the ratchets 802. In order to release the ribs 512, and hence the bottom wall 502, the cam 401, illustrated in Figure 1 in the inactive position, that is, unable to interact with the buckets 2, is moved into the appropriate position by the cylinder 411. In this situation the rollers 832 of the ratchets 802 contact the surface of the cams 401 and, as shown in Figure 5, this causes the ratchets 802 to open. The bottom wall 502 is thus released and, being pushed back by the material 10 collected by the loading mouth 102, it is able to move into the position which allows the greatest loading capacity. The bottom wall is then held in this position by the lips 622 positioned on the slots 612, and preferably made of an elastomeric material.

Figures 6 to 8 show the contrary case, i.e. the case where it is wished to position the bottom wall 502 of the buckets 2 to give the buckets the least loading capacity. This operation is effected by running the conveyor in the opposite direction to the loading direction. Here, too, the cam 301, by which the bottom wall 502 can be moved, is arranged in an active position by the cylinder 311. In this position the cam is able to act on the roller 522 which is at the free end of the rib 512 of the bottom wall 502. The cam 301 raises the rib 512 until the latter is forced to engage with the tooth 822 of the ratchet 802, which locks it, as illustrated in Figure 7, in the position of least capacity of the bucket 2. At this point the roller 522 and the cam 301 must be able to disengage from each other; for this purpose the cylinder 311 is retracted, or more simply the cylinder is pneumatic and is loaded so as to retract elastically as the bucket 2 moves past, as illustrated in Figure 8. As can be seen in Figure 7 and Figure 9, the cam 301 is able to insert itself into the slots 612 of the top wall 602 because its cross section is similar to that of the ribs 512. Once all the buckets of the conveyor have been moved back to the configuration of least loading capacity, the direction of rotation of the chain 201 can be reversed again for normal loading operations.

The bucket conveyor as described here makes it possible, in a simple and modifiable manner, with great rapidity to adapt the capacity of the buckets satisfactorily to different types of materials needing to be transferred, so optimizing the operation of the conveyor.

## Claims

1. Bucket conveyor comprising a plurality of buckets (2) connected, equidistantly from each other, to an endless drive element (201) arranged on a support (1) having at one end at least one drive pulley and at the other end at least one turn pulley (101), each of the said buckets (2) comprising a loading mouth (102), a bottom wall (502), two side walls (402) and a top wall (602), the conveyor being characterized in that at least one portion (502) of one of the said walls of the bucket (2) is mobile relative to the other walls, and can adopt at least two positions, which allow the said bucket at least one configuration of greatest capacity and one of least capacity, means being provided on the said conveyor for moving (401, 301) and positioning (802, 622) the said wall portion (502).

2. Bucket conveyor according to Claim 1, in which the means for moving the said wall portion comprise means (301) for moving it from the position of greatest capacity to that of least capacity, and means (401) for moving it from the position of least capacity to that of greatest capacity, and in which the said means for positioning the said wall portion comprise means (802) for retaining the wall portion in the position of least capacity and means (622) for retaining the wall portion in the position of greatest capacity.

3. Bucket conveyor according to Claims 1 or 2, characterized in that the bottom wall (502) is mobile relative to the other walls of the bucket (2).

4. Bucket conveyor according to Claim 3, in which the said bottom wall (502) is connected along one edge (532) in a pivoting manner, near the loading mouth (102) of the bucket (2), while at the opposite edge, nearest the top wall (602), it has at least one element (512) designed to be acted upon by the said movement means (301, 401) and positioning means (802, 622), the said element (512) projecting out through a slot (612) formed along the said top wall (602) approximately perpendicular to the said top wall (602) and parallel to the axis of travel of the conveyor.

5. Bucket conveyor according to Claims 2 and 4, characterized in that the means for effecting the movement from the position of greatest capacity to that of least capacity comprise at least one cam (301) that acts on the rollers (522) located at the end of the said element (512) projecting from the bottom wall (502), the said cam being connected to the said support (1) of the conveyor and being movable between an active position and an inactive position by suitable control means (311), which cam (301) is placed in the active position when the endless drive element (201) is driven in the opposite direction to that of the loading mouths (102) of the buckets (2).

6. Bucket conveyor according to Claim 5, in which the said control means comprise at least one cylinder (311), preferably pneumatic, the said cam being connected to the said support by arms (321) of a parallel-motion mechanism.

7. Bucket conveyor according to Claim 5 or 6, in which the said cam (301) is basically an obtuse angled linear cam located on a plane coinciding with the plane passing through the said slot (612) and perpendicular to the top wall (602) of the bucket (2).

8. Bucket conveyor according to any one of Claims 5 to 7, in which the means for retaining the bottom wall in the position of least capacity comprise at least one ratchet (802) that is hinged (842) to the said top wall in the vicinity of that end of the said slot (612) which is nearest the loading mouth (102) and that is provided with elastic loading means (812) and engages the end of the said projecting element (512) of the wall, being provided with a roller (832) acted upon by the said means (401) for moving it from the position of least capacity to the position of greatest capacity.

9. Bucket conveyor according to Claim 7, characterized in that the said means for effecting the movement from the position of least capacity to that of greatest capacity comprise at least one cam (401) that acts on the said roller (832) which is integral with the retention means (802) for maintaining the position of least capacity and can be moved between an active position and an inactive position by suitable control means (411), the said means being in the active position with the endless drive element which is driven in the direction of the loading mouths (102) of the buckets (2).

10. Bucket conveyor according to Claim 9, in which the said cam (401) is essentially a linear cam with its axis parallel to that of the conveyor and its entrance end having approach surfaces (431).

11. Bucket conveyor according to any one of the preceding Claims 5 to 10, characterized in that the said means for retaining the wall portion in the position of greatest capacity comprise lips (622) of deformable, preferably elastomeric, material positioned at that end of the slots (612) formed in the top wall (602) which is furthest from the loading mouth (102).
